Europäisches Patentamt

European Patent Office

Office européen des brevets

(11) Publication number : **0 466 478 A2**

# EUROPEAN PATENT APPLICATION

(21) Application number : **91306260.0**

(51) Int. Cl.[5] : **G06K 15/00**

(22) Date of filing : **10.07.91**

(30) Priority : **10.07.90 JP 182270/90**
**10.07.90 JP 182271/90**

(43) Date of publication of application :
**15.01.92 Bulletin 92/03**

(84) Designated Contracting States :
**DE FR GB IT NL SE**

(71) Applicant : **TOKYO ELECTRIC CO., LTD.**
**6-13, 2-chome, Nakameguro**
**Meguro-ku Tokyo (JP)**

(72) Inventor : **Iga, Kaname**
**9, Nirayama-dotewada, Nirayama-cho**
**Tagata, Shizuoka (JP)**
Inventor : **Kikuchi, Takashi**
**K-305, Hara-danchi, 990-11, Otsuka**
**Numazu, Shizuoka (JP)**
Inventor : **Tamura, Toshiyuki**
**6-17, Asahigaoka**
**Mishima, Shizuoka (JP)**

(74) Representative : **Tribe, Thomas Geoffrey et al**
**F.J. Cleveland & Company 40-43 Chancery**
**Lane**
**London WC2A 1JQ (GB)**

(54) **Printer system.**

(57)    Disclosed herein is a printer system comprising print data setting means, data converting means and printing means. The print data setting means outputs one-bit print data for binary expression. These print data ate converted by the data converting means to the same number of bits as in the print data for multivalued expression. The binary expression print data from the data converting means and the multiple-bit, multivalued expression print data from the print data setting means are input to the printing means for printing. This allows the printer system to implement multivalued expression printing such as a half tone and smoothing printing as well as high-speed binary expression printing. The printer system further comprises print pattern storing means which stores picture elements with respect to each of a plurality of kinds of multivalued expression. These plurality of kinds of multivalued expression are set with a plurality of picture elements for multivalued expression in units of picture elements. When the print data setting means outputs a given kind of multivalued expression, the picture elements corresponding thereto are selectively retrieved from the print pattern storing means for input to the printing means. This permits printing in a plurality of kinds of multivalued expression with no drop in the printing speed.

EP 0 466 478 A2

# FIG.1

The present invention relates to a printer system capable of multivalued expression per picture element.

Conventional printer systems continuously plot primary scanning lines over an image bearing body that relatively moves in the secondary scanning direction in order to create a target image using printing means. The printing means may be a line head, an optical scanner or the like which has at least one active element. For example, the electrophotographic line printer comprises a charger, a line head, a developing machine and a transfer machine located opposite to a photosensitive drum that is the image bearing body. In operation, the charger charges the circumference of the photosensitive drum with a voltage. A plurality of active elements mounted on the line head selectively emit light onto the charged drum circumference, forming a latent image thereon. The latent image is developed by the developing machine that uses a toner as its developing solution. The developed image is transferred by the transfer machine onto printing paper.

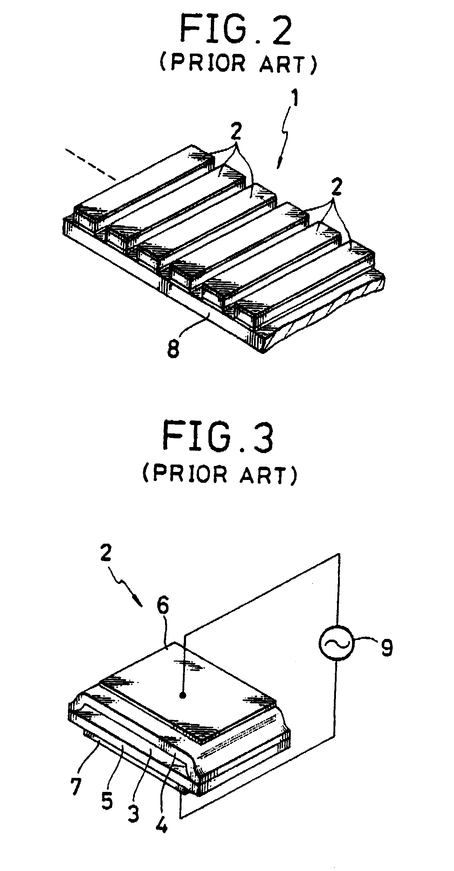

LEDs (light emitting diodes) have been generally used as the active elements of the line head. One disadvantage of the LEDs is that they tend to differ in characteristics when produced in large quantities. As a result, it is difficult to manufacture a line head with LEDs that provide uniform light emissions. One envisaged solution to this problem is the use of edge emission type EL (electro-luminescent) devices as the active elements of the line head. Figs. 2 and 3 illustrate prior art line heads utilizing edge emission type EL devices. As depicted in Fig. 3, an edge emission type EL device 2 on a line head 1 has a thin film active layer 3 sandwiched from above and below with dielectric layers 4 and 5. The thin film active layer 3 is made of zinc sulfide and other ingredients including active elements. The dielectric layers 4 and 5 are in turn sandwiched from above and below with flat electrodes 6 and 7. A flatly polarized light emission comes out of the edge of the active layer 3. The intensity of the emission from the edge emission type EL device can be about 100 times as high as that of conventional EL devices that emit light from their top. As shown in Fig. 2, a plurality of edge emission type EL devices 2 of the above-mentioned construction may be mounted on a substrate 8 through the use of known thin film technology or the like. When supplemented with a rod lens array, not shown, the EL device arrangement forms the line head 1.

Illustratively, the line head 1 has each of its edge emission type EL devices 2 connected via a switching element to an AC power source 9. Then, the line head 1 is positioned, along with the charger, developing machine and transfer machine, opposite to the scanned surface of the photosensitive body. This constitutes an edge emission type EL printer, not shown, which is a typical printer system. One disadvantage of this kind of edge emission type EL printer is that its edge emission type EL devices 2 provide extremely flat outgoing beams with their aspect ratio exceedingly high, which must be corrected using suitable means.

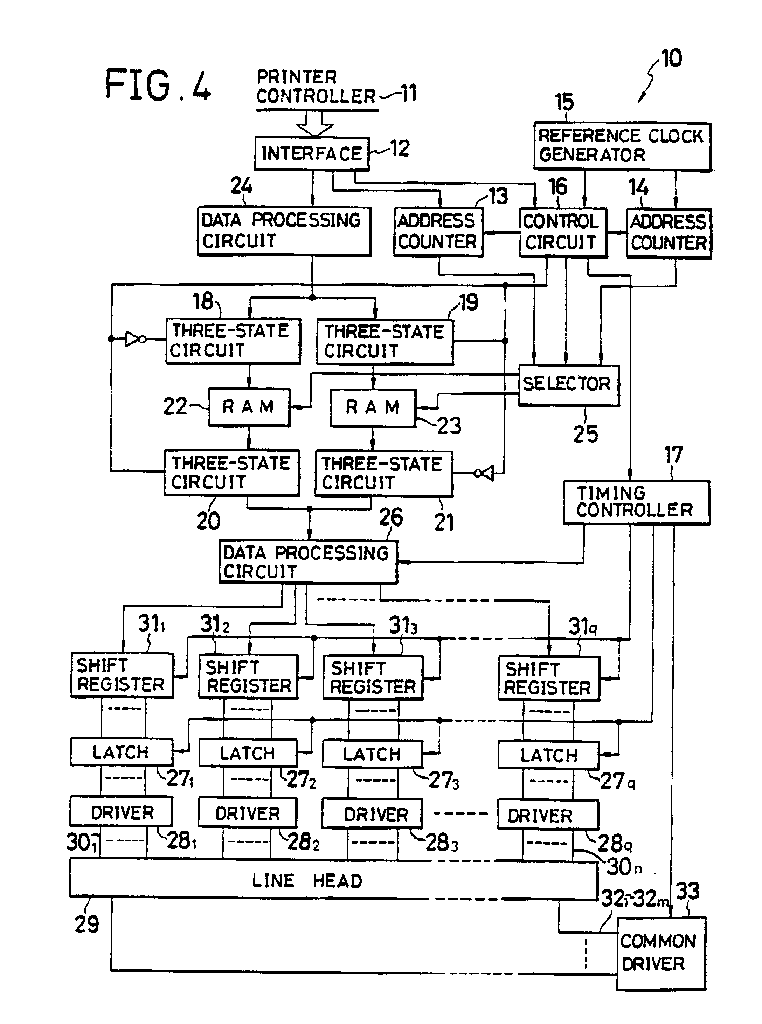

One solution to the above disadvantage is the apparatus that this applicant has invented and described in Japanese Patent Laid-Open No. 1-97081. This prior art printer system will now be described with reference to Figs. 4 through 7.

An edge emission type EL printer 10 has an interface 12 connected to a printer controller 11 of a data processing apparatus, not shown, such as a word processor or a computer with a built-in print data setting means. The interface 12 is also connected to a timing controller 17 via a control circuit 16. The control circuit 16 is connected to two address counters 13 and 14 and a reference clock generator 15. Furthermore, the interface 12 is connected via a first data processing circuit 24 to two RAM's 22 and 23 that are line memories whose inputs and outputs are connected to three-state circuits 18 through 21. The RAM's 22 and 23 are also connected via a selector 25 to the control circuit 16 and the address counters 13 and 14. In addition, the RAM's 22 and 23 are connected via the three-state circuits 20 and 21 to a second data processing circuit 26 to which the timing controller 17 is connected. The data processing circuit 26 is connected in parallel to shift registers $31_l$ - $31_q$. The shift registers $31_l$ - $31_q$ are in turn connected via latches $27_l$ - $27_q$ and drivers $28_l$ - $28_q$ to block electrodes $30_l$ - $30_n$ of a line head 29 that serves as printing means. The timing controller 17 is connected to a common driver 33, to the latches $27_l$ - $27_q$ and to the shift registers $31_l$ - $31_q$. The common driver 33 is connected to common electrodes $32_l$ - $32_m$ of the line head 29. The circuit parts 13 through 33 constitute the printing means.

The line head 29 has m x n edge emission type EL devices 2 counted thereon.

In operation, the edge emission type EL printer 10 of the above-described construction has its first data processing circuit 24 to compress print data per primary scanning line through re-arrangement or other techniques. The print data contains clock signals that are input from the printer controller 11 via the interface 12.

The compressed print data is stored temporarily in either of the RAM's 22 and 23 while one primary scanning line is being printed. Simultaneously, the other RAM 23 or 22 outputs the previously and temporarily stored print data at a high speed.

Selection of either the RAM 22 or 23 for temporary storage of the print data is carried out by the selector 25 that operates on the timing signal coming from the printer controller 11 into the address counter 13. Output of the print data from the RAM 22 or 23 is executed by the control circuit 16 and the address counter 14, the two circuits operating synchronously on a high-speed output reference clock signal coming from the reference clock generator 15.

The output print data is processed again by the second data processing circuit 26 into a print-ready format. From the second data processing circuit 26, the print data is output consecutively to the shift registers $31_l$ - $31_q$ and held by the latches $27_l$ - $27_q$. The parts 31, 27 and the common driver 33 are controlled by the timing controller 17. The block electrodes $30_l$ -$30_n$ and the common electrodes $32_l$ - $32_m$ respectively output low- and high-voltage driving pulses predetermined numbers of times to the line head 29.

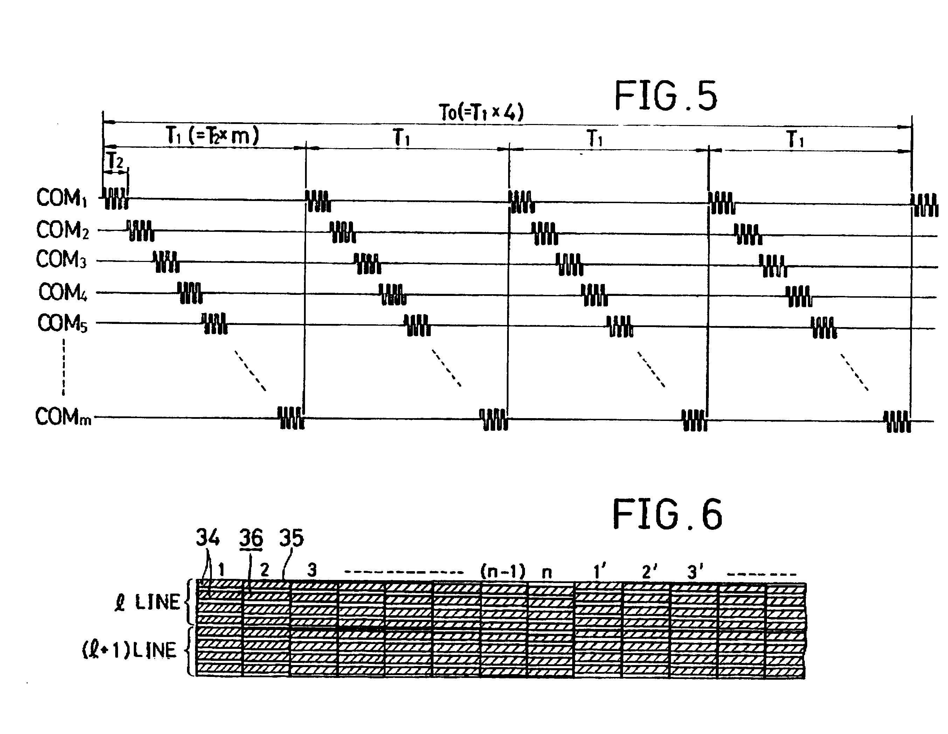

As shown in the timing chart of Fig. 5, the edge emission type EL printer 10 applies a plurality of driving pulses to the line head 29 during a time $T_0$ for drawing one primary scanning line. This operation is repeated during the time $T_0$ so that the line head 29 will repeat its line emission for the width of one primary scanning line.

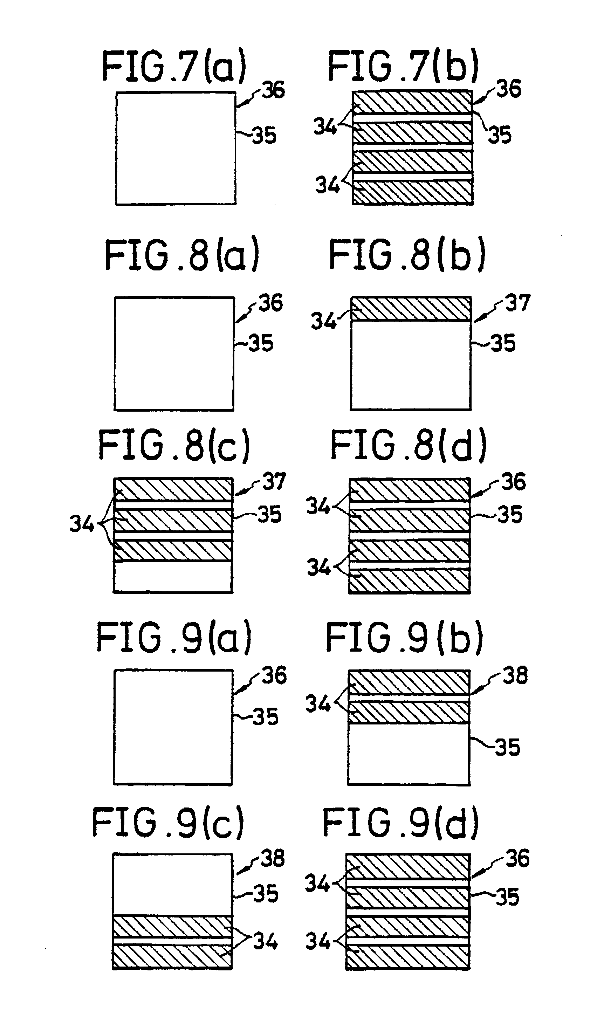

One emission by one edge emission type EL device 2 forms a flat picture element 34. With the repeated emissions, a plurality of flat picture elements 34 are formed in the secondary scanning direction within a picture element region 35. Thus a substantially square picture element 36 is formed, as illustrated in Fig. 7, using the flat beams of emissions by the edge emission type EL devices 2. And as depicted in Fig. 6, the primary scanning line edges are smoothed so that an image of high quality is printed.

The edge emission type EL printer 10, as shown in Fig. 7, repeats non-emissions and full-emissions of its EL devices 2 within each picture element region 35 in order to print the black-and-white picture elements 36. This applicant has also proposed an improved edge emission type EL printer in Japanese Patent Application No. 1-97085. This printer provides half tone expression by reducing the number of picture elements in the manner desired within each picture element region. A further improved edge emission type EL printer has been proposed by this applicant in Japanese Patent Application No. 1-280417. The latter printer is capable of smoothing the edges of the images to be printed.

The above-mentioned printers work as follows. For example, when a half tone image is to be expressed with four emissions forming one picture element 36, black-and-white picture elements 36 shown in Figs. 8 (a) and 8 (d) are supplemented with half tone picture elements 37 each comprising one or three picture elements 34 which, as depicted in Figs. 8 (b) and 8 (c), are generated with one or three emissions by the EL device 2 within each picture element region 35. The picture elements 36 and 37 together constitute a graduated print image of high resolution with a different density per picture element.

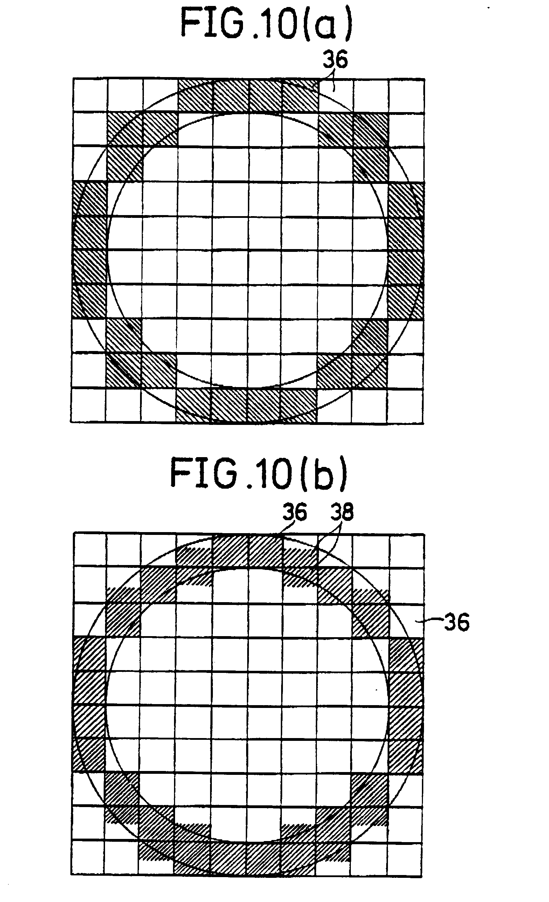

Likewise, when a smooth edge image is to be expressed with four emissions forming one picture element 36, black-and-white picture elements 36 shown in Figs. 9 (a) and 9 (d) are supplemented with smoothing picture elements 38 each comprising two picture elements 34 which, as depicted in Figs. 9 (b) and 9 (c), are generated with two emissions by the EL device 2 within each picture element region 35. These smoothing picture elements 38 are positioned on the edges of an image that contains binary picture elements 36, as illustrated in Fig. 10 (a). The result is a smooth edge image of Fig. 10 (b) with no degradation in resolution.

These printer systems capable of multivalued expression internally store beforehand the formation of each picture element as print data of multiple bits, and control the EL devices 2 constituting each picture element for emission according to the print data. For example, where binary picture elements 36 are supplemented with the picture elements 37 and 38 for multivalued expression, as shown in Figs. 8 and 9, the black-and-white binary picture elements 36 are represented by two-bit print data (0, 0) - (l, l) while the multivalued picture elements 37 and 38 are represented by print data (0, l) - (l, 0).

In the conventional edge emission type EL printer 10 that uses black-and-white picture elements 36 to form an image, each EL device 2 operates in one of two ways: non-emission or full-emission. The print data that controls this operation is represented by either l or 0 per bit.

The above-described printer system that uses multivalued picture elements 37 and 38 in addition to black-and-white picture elements 36 is capable of printing an image in such multivalued expression as half tone printing or smoothing printing. In practice, however, this printer system often prints images in binary expression alone.

Designed for multivalued expression, the above printer system stores its print data about black-and-white binary elements 36 not in single bits -- which are sufficient for the purpose -- but in multiple bits. This connotes that it takes more time to perform the data processing involved such as data transfer and temporary storage, with the result that binary images are formed at lower speeds than in the binary expression setup.

## OBJECT AND SUMMARY OF THE INVENTION

It is therefore an object of the present invention to provide a printer system capable of printing both in the multivalued format for half tone and smoothing expression and in the binary format for high-speed binary expression.

It is another object of the present invention to provide a printer system capable of printing in a plurality of kinds of multivalued expression without degrading the printing speed.

In achieving the foregoing and other objects of the present invention and according to one aspect thereof, there is provided a printer system comprising: printing means having at least one active element for multivalued expression in units of picture elements, the printing means creating an image in accordance with multiple-bit print data that are input; print data setting means for setting the print data for control over the operation of the active elements for each picture element, the print data being set in one-bit format for binary expression and in multiple-bit format for multivalued expression; data converting means for converting one-bit print data for binary expression into the same number of bits as in the print data for multivalued expression, the one-bit print data being output by the print data setting means; and an interface for inputting to the printing means both the binary expression print data of multiple bits coming from the data converting means and the multivalued expression print data of multiple bits coming from the print data setting means. The printer system of the above construction allows the printing means operating with multiple-bit print data to be driven with one-bit print data. When performing printing of multivalued expression such as half tone and smoothing printing, the printer system processes multiple-bit print data in the same manner as conventional printers; when printing images of binary expression, the printer system handles print data in one-bit format so as to speed up such data processing tasks as data transfer and temporary storage.

BRIEF DESCRIPTION OF THE DRAWINGS

Fig. 1 is a block diagram of a first embodiment of the present invention;
Fig. 2 is a perspective view of a conventional edge emission type EL device array;
Fig. 3 is a perspective view of a conventional edge emission type EL device;
Fig. 4 is a block diagram of the prior art printer system disclosed in Japanese Patent Application No. 1-97081;
Fig. 5 is a timing chart associated with the printer system of Fig. 4;
Figs. 6 through 10 are front views of printed images used to explain aspects of printing operation; and
Fig. 11 is a block diagram of a second embodiment of the invention.

DETAILED DESCRIPTION OF PREFERRED EMBODIMENTS

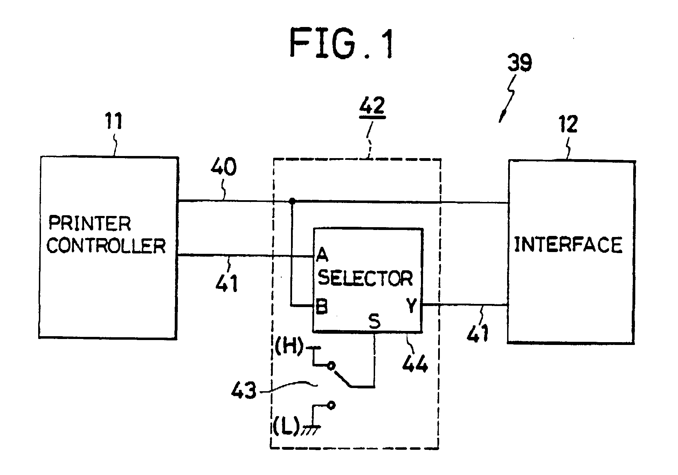

The first embodiment of the present invention will now be described with reference to Fig. 1. An edge emission type EL printer 39 practiced as the first embodiment of the invention has substantially the same construction as the prior art edge emission type EL printer 10 mentioned above, and is capable of multivalued expression such as half tone and smoothing printing. For example, the edge emission type EL printer 39 has multivalued expression print data represented in two bits. Two data lines 40 and 41 are interposingly connected between the printer controller 11 and the interface 12 via a data converting circuit 42 that acts as data converting means. In the data converting circuit 42, the switchable input terminals of a selector 44 are connected to the data lines 40 and 41, the selector being connected to a changeover switch 43. The output terminal of the selector 44 is connected to the data line 41 alone. In this edge emission type EL printer 39, two-bit print data for multivalued expression are transferred over the two data lines 40 and 41, while one-bit print data for binary expression are transferred over the data line 40. The printing-related circuits downstream of the interface 12 operate with two-bit print data.

Illustratively, the edge emission type EL printer 39 of the above construction performs printing of multivalued expression such as a half tone and smoothing printing using multivalued expression picture elements 37 and 38 shown in Figs. 8 and 9. In that case, the changeover switch 43 causes the selector 44 to permit data input and output over the data line 41. The two-bit print data for multivalued expression, (0, 0), (0, l), (l, 0) and (l, l), are input over the data lines 40 and 41 from the printer controller 11 of a data processing apparatus, not shown, in a word processor, a computer or the like containing print data setting means. These two-bit print data are transferred over the data lines 40 and 41 to the interface 12 without being converted by the data converting circuit 42. Past the interface 12, the two-bit print data are used for multivalued expression printing such as a half tone and smoothing printing.

Where the edge emission type EL printer 39 performs binary expression printing with black-and-white picture elements 36 illustrated in Figs. 6 and 7, the changeover switch 43 causes the selector 44 to connect the input over the data line 40 to the output over the data line 41. One-bit print data for binary expression, (0, 0) - (l, l), are input over the data line 40 from the printer controller 11 of a data processing apparatus. These one-bit print data are divided by the data converting circuit 42 into data items for the two data lines 40 and 41. That is, the data are converted to pseudo-two-bit print data such as (0, 0) - (l, l). The converted data are transferred to the interface 12 for use in binary expression printing.

In the manner described, the edge emission type EL printer 39 drives the printing means that operates with two-bit print data also with one-bit print data. Given this edge emission type EL printer 39, the data processing apparatus, not shown, which outputs print data from the printer controller 11 to the interface 12, need only process one-bit print data when binary expression printing is to be conducted. There is no need to process print data of the same number of bits for binary expression as for multivalued expression, as required of conventional printer systems. With less time needed to process print data, the speed at which to print binary images is significantly improved.

To sum up the features of the first embodiment, the edge emission type EL printer 39 processes multiple-bit print data for multivalued expression printing (e.g., a half tone and smoothing printing) in the same manner as conventional printer systems, and processes the print data as one-bit data for binary expression at higher speeds. This two-tier approach allows the printer system to implement both multivalued expression printing such as a half tone and smoothing printing and high-speed binary expression printing concurrently, taking advantage of the benefits of both modes of printing.

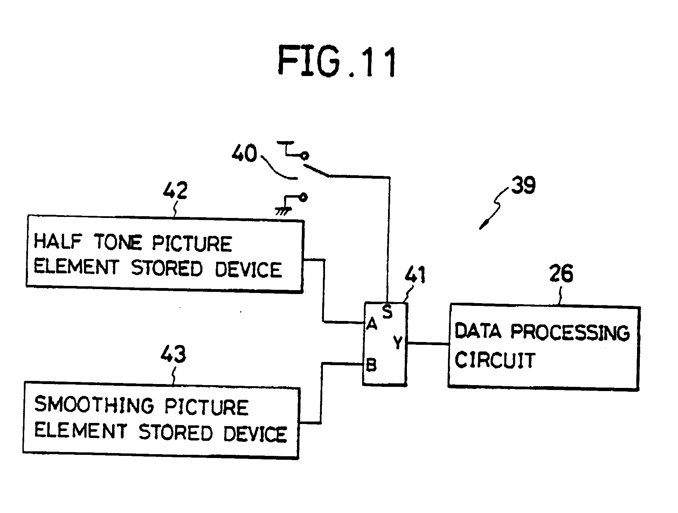

The second embodiment of the invention will now be described with reference to Fig. 11. The edge emission type EL printer 39 practiced as the second embodiment of the invention has substantially the same construction as the prior art edge emission type EL printer 10 mentioned above, and is capable of multivalued expression such as a half tone and smoothing printing. Print data are output from the printer controller 11 of a data processing apparatus, not shown, in a word processor, a computer or the like containing print data setting means. These data are in the two-bit format common to that of the data (0, 0) - (l, l) for a half tone and smoothing printing.

In this edge emission type EL printer 39, the second data processing circuit 26 is connected via a selector 41 to a half tone picture element stored device 42 and a smoothing picture element stored device 43. The selector 41 serves as pattern switching means to which a changeover switch 40 is connected, and the devices 42 and 43 are each print pattern storing means. The half tone picture element stored device 42 and the smoothing picture element stored device 43 contain four picture elements 36 and 37 for half tone printing as well as four picture elements 36 and 38 for smoothing printing, the picture elements being shown in Figs. 8 and 9. An address common to the two picture element stored devices 42 and 43 is set using two-bit data such as (0, 0) - (l, l).

In the edge emission type EL printer 39 of the above construction, the changeover switch 40 causes the selector 41 to connect the half tone picture element stored device 42 with the data processing circuit 26 illustratively where half tone printing is desired. When two-bit data (0, 0) - (l, l) are input from the printer controller 11, the corresponding picture elements 36 and 37 for half tone expression are sent from the half tone picture element stored device 42 to the data processing circuit 26 so as to execute half tone printing. Likewise, where smoothing printing is desired, the selector 41 connects the smoothing picture element stored device 43 with the data processing circuit 26.

Then those picture elements 36 and 38 for smoothing expression which correspond to two-bit print data (0, 0) - (l, l) are sent to the data processing circuit 26 to carry out smoothing printing.

As described, the edge emission type EL printer 39 prints images in two kinds of multivalued expression using a total of six picture elements 36 through 38. The data processing involved is performed using two-bit print data. The edge emission type EL printer 39 is therefore capable of setting print data for a plurality of kinds of multivalued expression using the same number of bits as that of print data for one kind of multivalued expression. Because there is no need to raise the number of bits of print data every time another kind of multivalued expression is added, a plurality of kinds of multivalued expression are made available with no deterioration in the speed of printing.

Although the invention has been described in the form of the edge emission type EL printer 39, the invention is not limited to this type of printer system alone. Alternatively, the invention may be applied to diverse kinds of printer systems capable of multivalued expression in units of picture elements. One alternative exemple of such printer systems is a laser printer that varies the intensity of a laser beam to change the diameter of each picture element. Another alternative example is a thermal printer that varies the intensity of electrically generated heat to change the density of picture elements.

As many apparently different embodiments of the present invention may be made without departing from the spirit and scope thereof, it is to be understood that the invention is not limited to the specific embodiments thereof except as defined in the appended claims.

## Claims

1. A printer system comprising:

   printing means having at least one active element for multivalued expression in units of picture elements, said printing means creating an image in accordance with multiple-bit print data that are input;

   print data setting means for setting the print data for control over the operation of said active elements for each picture element, said print data being set in one-bit format for binary expression and in multiple-bit format for said multivalued expression;

   data converting means for converting one-bit print data for binary expression into the same number of bits as in the print data for said multivalued expression, said one-bit print data being output by said print data setting means; and

   an interface for inputting to said printing means both the binary expression print data of multiple bits coming from said data converting means and the multivalued expression print data of multiple bits coming from said print data setting means.

2. A printer system comprising:

printing means having at least one active element for multivalued expression in units of picture elements, said printing means creating an image in accordance with multiple-bit print data that are input;

print pattern storing means for storing picture elements with respect to each of a plurality of kinds of multivalued expression, said plurality of kinds of multivalued expression being set with a plurality of picture elements for multivalued expression in units of picture elements;

print data setting means for setting as multiple-bit common data the picture elements for said plurality of kinds of multivalued expression; and

pattern switching means for selectively retrieving from said print pattern storing means the picture elements corresponding to each of said plurality of kinds of multivalued expression, said selective retrieval being performed on the basis of the print data output from said data setting means, said pattern switching means further inputting said output print data to said printing means.

3. A printer system according to claim 2, wherein said print pattern storing means comprises a half tone picture element stored device and a smoothing picture element stored device.

# FIG.1

# FIG.2
## (PRIOR ART)

# FIG.3
## (PRIOR ART)

FIG.4

# FIG.5

$T_0(=T_1 \times 4)$

$T_1 (=T_2 \times m)$    $T_1$    $T_1$    $T_1$

$T_2$

$COM_1$

$COM_2$

$COM_3$

$COM_4$

$COM_5$

$COM_m$

# FIG.6

34   36   35

1   2   3  ------------- (n-1) n   1'   2'   3'  -------

$\ell$ LINE

$(\ell+1)$LINE

FIG.7(a)

FIG.7(b)

FIG.8(a)

FIG.8(b)

FIG.8(c)

FIG.8(d)

FIG.9(a)

FIG.9(b)

FIG.9(c)

FIG.9(d)

## FIG.10(a)

## FIG.10(b)

# FIG.11

HALF TONE PICTURE
ELEMENT STORED DEVICE

SMOOTHING PICTURE
ELEMENT STORED DEVICE

DATA PROCESSING
CIRCUIT